## Europäisches Patentamt

## European Patent Office

## Office européen des brevets

(11) Numéro de publication: **0 131 080**
**B1**

(12) **FASCICULE DE BREVET EUROPEEN**

(45) Date de publication du fascicule du brevet: **19.11.87**

(21) Numéro de dépôt: **83401390.6**

(22) Date de dépôt: **06.07.83**

(51) Int. Cl.⁴: **B 08 B 3/12**

(54) Procédé et appareil de nettoyage de grosses pièces.

(43) Date de publication de la demande:
**16.01.85 Bulletin 85/03**

(45) Mention de la délivrance du brevet:
**19.11.87 Bulletin 87/47**

(84) Etats contractants désignés:
**AT BE CH DE FR GB IT LI LU NL SE**

(56) Documents cités:
**DE-C- 733 470**
**FR-A-2 008 883**
**US-A-3 024 138**
**US-A-3 105 779**

(73) Titulaire: **SNEF ELECTRO MECANIQUE**
**17-19 sixième Rue - Z.I.**
**F-13127 Vitrolles (FR)**
(73) Titulaire: **TECHNI CONTACT**
**337, route des Gras**
**F-74210 Faverges (FR)**

(72) Inventeur: **Petit, Nicaise**
**9, rue des Cyprès**
**Châteauneuf-le-Rouge F-13790 Rousset (FR)**
Inventeur: **Moisset, Jean-Claude**
**337, route des Gras**
**F-74210 Faverges (FR)**

(74) Mandataire: **Catherine, Alain**
**GETSCO 42, avenue Montaigne**
**F-75008 Paris (FR)**

**Le dossier contient des informations techniques présentées postérieurement au dépôt de la demande et ne figurant pas dans le présent fascicule.**

Courier Press, Leamington Spa, England.

## Description

La présente invention concerne d'une manière générale un procédé et un appareil pour le nettoyage de grosses pièces électriques ou mécaniques, comme par exemple, les rotors et stators de machines dynamoélectriques ou les rotors de turbines à gaz, vannes automatiques, décontamination des moteurs électriques dans l'industrie nucléaire.

Après un certain temps d'utilisation, des pièces comme, par exemple les rotors ou stators de machines dynamoélectriques, sont souillées par des impuretés telles que des particules de carbone et des graisses et huiles qui s'accumulent sur ces pièces. L'accumulation de ces impuretés entraîne une diminution de la valeur d'isolement de la pièce, et il faut démonter la machine et nettoyer la pièce pour restaurer autant que possible sa valeur d'isolement et permettre sa réutilisation.

On a utilisé plusieurs procédés pour le nettoyage de telles pièces.

Un procédé consiste à soumettre la pièce souillée à de la vapeur d'eau sous pression. Sous l'action mécanique, les souillures sont décollées et éliminées de la pièce. Ce procédé présente de nombreux inconvénients. L'action de la vapeur d'eau est souvent imparfaite, et comme il n'est pas possible de déterminer au cours du processus le degré de nettoyage, il faut à la fin du cycle mesurer l'efficacité du nettoyage, et si le degré voulu n'est par atteint recommencer le cycle de nettoyage. Une telle procédure est longue et coûteuse. De plus, la vapeur d'eau humidifiant la pièce traitée, en particulier l'isolant dans le cas d'une pièce de machine dynamoélectrique, et par suite il faut inclure dans le cycle, un séchage de la pièce d'environ 24 heures, par étuvage par exemple, le contrôle de l'isolement se faisant, in fine, après cette étape. Le séchage, qui représente une étape supplémentaire du procédé, non seulement est long et coûteux, mais souvent se traduit par une déformation d'une partie de la pièce. Par exemple, dans le cas d'un rotor de machine dynamoélectrique, l'action de la chaleur peut provoquer une déformation du collecteur, et il faut alors réusiner ce collecteur ce qui ajoute encore au temps et au coût du procédé.

Un autre procédé consiste à utiliser un solvant sous pression, par exemple un solvant fluorocarboné, ce solvant agissant sur les souillures à la fois chimiquement et mécaniquement. Ce procédé présente aussi des inconvénients importants. Le solvant étant sous pression, il n'est pas possible de contrôler le degré de nettoyage de la pièce en continu. Par conséquent, il faut achever le cycle de nettoyage, sortir la pièce, contrôler son isolement, et là encore, si celui-ci n'est pas satisfaisant recommencer un cycle de nettoyage. De plus l'absence de contrôle continu, peut faire que l'on prolonge outre mesure le processus de nettoyage à un point tel qu'il peut entraîner une détérioration de la pièce, par exemple des isolants dans le cas d'un rotor de machine dynamoélectrique. Egalement, dans le cas de pièces complexes, comportant des parties difficilement accessibles, le solvant sous pression ne peut atteindre efficacement certaines parties de la pièce qui de ce fait ne sont pas nettoyées ce qui résulte finalement en un nettoyage.

Un procédé ayant toutes les caractéristiques du préambule de la revendication 1 est connu du document US—A—3024138. Il n'y a aucune indication dans ce brevet du type de pièces nettoyées. De plus, il n'y a aucune indication de l'utilisation d'une énergie d'origine magnétostrictive. Surabondamment la fréquence utilisable va de 10 kHz à 120 kHz. Rien dans ce document ne suggère qu'il y aurait un avantage quelconque à utiliser une énergie ultrasonore d'origine magnétostrictive dans la gamme de fréquences de 18—25 kHz.

L'invention a donc pour but de fournir un procédé rapide, simple et efficace de nettoyage de pièce souillées qui remédie aux inconvénients précédents.

L'invention a aussi pour but de fournir un procédé rapide, simple et efficace de nettoyage des pièces souillées sans risque de détérioration de la pièce traitée.

L'invention a encore pour but de fournir un procédé rapide, simple et efficace de nettoyage de pièces souillées, sans risque de détérioration de la pièce traitée, et qui permet d'arrêter le nettoyage de la pièce à l'instant voulu, lorsque le degré de nettoyage voulu est atteint.

L'invention a enfin pour but de fournir un appareil pour la mise en oeuvre du procédé de l'invention.

Selon l'invention, on fournit un procédé de nettoyage d'une pièce souillée par des particules de carbone, des graisses et des lubrifiants qui consiste à

—mettre en place la pièce à l'intérieure d'une cuve;

—introduire un solvant dans la cuve jusqu'à immersion totale de la pièce à traiter;

—appliquer une énergie ultrasonore pendant un temps suffisant pour en eliminer les saletés; et

—enlever la pièce nettoyée de la cuve;
procédé caractérisé en ce que l'étape d'application d'une énergie ultrasonore consiste à appliquer une énergie ultrasonore d'origine magnétostrictive ayant une fréquence comprise entre 18 et 25 kHz. L'emploi simultané de solvant et des ultrasons permet une dissolution des liants des saletés et un décollement mécanique de celles-ci sans risque de détérioration d'une partie de la pièce.

L'invention fournit également un dispositif pour la mise en oeuvre du procédé.

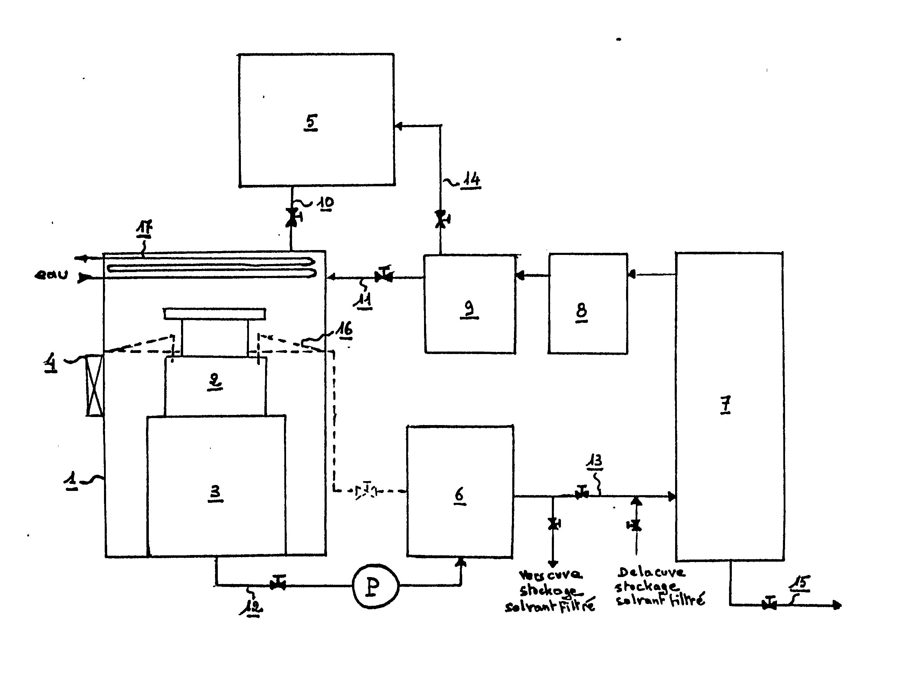

La suite de la description se réfère au dessin unique annexé qui représente un dispositif pour la mise en oeuvre de l'invention.

Bien que dans la description référence sera faite à un rotor de machine dynamoélectrique, il est bien évident que le procédé de l'invention peut s'appliquer à toutes pièces similaires telles que stator de machines dynamoélectriques, rotors de turbines à gaz, vannes automatiques, décontamination des moteurs électriques de l'industrie nucléaire.

Après une utilisation prolongée, les rotors des machines dynamoélectriques et en particulier des grosses machines dynamoélectriques sont souillés par des produits tels que du carbone, des graisses et des lubrifiants qui s'accumulent sur ce rotor et en particulier sur les isolants des bobinages. L'accumulation de ces saletés entraîne une perte d'isolement et après un certain temps il faut démonter le moteur et nettoyer le rotor pour en éliminer les saletés et rétablir la valeur d'isolement (isolement entre bobinages et masse) initiale ou une valeur d'isolement proche de la valeur initiale.

Les rotors de grosses machines dynamoélectriques, sont des pièces complexes, de grandes dimensions, dont certaines parties sont difficiles à atteindre.

Selon le procédé de l'invention on place le rotor sur un support dans une cuve et on immerge cette pièce dans un solvant approprié. Si on le souhaite, on peut chauffer le solvant pour accroître son efficacité. La température de chauffage dépend du solvant utilisé et ne doit pas endommager la pièce traitée. On soumet la pièce immergée dans le solvant à de l'énergie ultrasonore d'origine magnétostrictive à basse fréquence entre 18 et 25 kHz. L'action combinée du solvant et des ultrasons d'origine magnétostrictive décolle la saleté du rotor.

Le solvant joue plusieurs roles essentiels dans le procédé. Il agit en dissolvant des liants de saletés solides (graisses, lubrifiants, etc.) de milieu de propagation des ultrasons et de moyens de réception et de transport des saletés solides décollées de la pièce. On peut, le cas échéant, filtrer puis distiller le solvant pour en éliminer les particules solides et les impuretés dissoutes et recycler ce solvant dans le procédé de l'invention.

La durée du nettoyage est variable et dépend de la pièce traitée, du solvant utilisé, de la fréquence de l'énergie ultrasonore d'origine magnétostrictive utilisée. En général on obtient des résultats satisfaisants pour une durée de traitement allant de 10 minutes à 30 minutes ou plus. Dans une réalisation recommandée du procédé, pour un rotor de machine dynamoélectrique, on peut mesurer en continu la valeur d'isolement entre les bobinages et la masse au moyen de tout dispositif de mesure approprié et on arrête le cycle de nettoyage lorsque cette valeur d'isolement, telle que mesurée, est égale ou proche de la valeur nominale initiale.

On peut utiliser dans le présent procédé tout solvant classique approprié qui dissout les graisses, huiles et lubrifiants et qui n'est pas agressif vis-à-vis de la pièce traitée. Par exemple, on peut utiliser comme solvant les hydrocarbures, les hydrocarbures halogénés, les savons, les détergents, les esters, et cétones etc. On recommande particulièrement d'utiliser comme solvant les hydrocarbures fluorés, et tout particulièrement le fréon®.

L'énergie ultrasonore utilisée doit être d'origine magnétostrictive et de basse fréquence comprise entre 18 et 25 kHz et plus particulièrement entre 18 et 20 kHz. Des ultrasons de fréquence supérieure à 25 kHz n'ont pas une énergie suffisante pour traverser des pièces de grandes dimensions comme les rotors de grosses machines dynamoélectriques. Une fréquence inférieure à 18 kHz serait difficile à mettre en oeuvre.

On peut le cas échéant, prévoir une mise en circulation du solvant pour faciliter l'élimination des particules solides et assurer une meilleure pénétration du solvant à l'intérieur de la pièce à nettoyer.

Le procédé peut être discontinu on continu. Dans le cas d'un procédé discontinu, à la fin du cycle de nettoyage on peut soutirer le solvant, le filtrer, le distiller et le stocker pour une future utilisation. Dans le cas du procédé continu, on soutire continuellement du solvant de la cuve, on le filtre, le distille et le renvoit dans une cuve de stockage. Dans le même temps on maintient le niveau de solvant dans la cuve en alimentant en solvant frais depuis la cuve de stockage.

Selon une réalisation recommandée de l'invention, on place la pièce à traiter sur un support dans une cuve de traitement, on introduit du fréon® comme solvant dans la cuve de manière à immerger totalement la pièce, on chauffe ce fréon® à environ 30°C et on applique une énergie ultrasonore d'origine magnétostrictive d'une fréquence de 20 kHz dans la zone de la pièce à traiter pendant environ 10 à 30 minutes. Une fois terminé ce traitement, on soutire le solvant et on le stocke en vue de sa réutilisation après filtration et distillation et on retire la pièce propre de la cuve.

On a représenté sur la figure, un dispositif pour la mise en oeuvre du procédé de l'invention. Le dispositif comprend une cuve de nettoyage 1 comportant un support 3 sur lequel repose la pièce à nettoyer, par exemple, le rotor 2 de grosse machine dynamoélectrique.

Disposé sur l'extérieur de la cuve, dans la région de la pièce à nettoyer se trouve un dispositif de production d'ultrasons à basse fréquence. Dans la réalisation représentée, ce dispositif comprend 4 transducteurs magnétostrictifs (4) symétriquement situés deux par deux, reliés à quatre générateurs ultrasoniques (non représentés). Le nombre de transducteurs peut varier largement et on pourrait utiliser, si on le souhaite, moins ou plus de transducteurs.

Le solvant est introduit dans la cuve 1 par une conduite 10 depuis une cuve de stockage de solvant frais 5 ou par le conduite 11 depuis un dispositif de recyclage de solvant qui sera décrit ci-après.

Le solvant usé est soutiré par une conduite 12 et envoyé au moyen de la pompe P à un filtre 6 qui en enlève les particules solides, et ce solvant filtré peut être soit renvoyé à une cuve de stockage de solvant filtré (non représentée), soit, par une conduite à une unité de distillation 7 où il est distillé. Le distillat condensé dans le condenseur 8 est envoyé par un dispositif de recyclage 9 (tel qu'une pompe) soit à la cuve de stockage 5 par la conduite 14 soit par la conduite 11 directement dans la cuve de traitement 1, et les résidus de distillation sont éliminés par la conduite 15.

L'appareil peut comporter, facultativement, un dispositif 16 (représenté sur la figure en traits interrompus) se composant de conduites et de buses agencées pour injecter du solvant à l'intérieur de la pièce; le dispositif d'injection 16 peut être reliè directement à une sortie du filtre 6.

On peut également prévoir un dispositif de chauffage (non représenté), par exemple des résistances à plaques, autour de la cuve dans la zone de la pièce à traiter, pour chauffer le solvant, ainsi qu'un dispositif de condensation de vapeur de solvant tel que le serpentin à eau 17, au sommet de la cuve, pour condenser les vapeurs de solvant.

Exemple

On a mesuré la valeur d'isolement (bobinages-masse) d'un rotor sale de machine dynamoélectrique et on a trouvé une valeur de 150.000 ohms. On a placé ce rotor sur le socle 3 dans la cuve 1. On a introduit depuis la cuve de stockage 5 du fréon de manière à immerger le rotor. On a chauffé ce fréon au moyen des résistances à plaques à environ 30°C. On condensait les vapeurs de fréon en faisant passer de l'eau dans le serpentin de la cuve.

Le dispositif de production des ultrasons comportait des transducteurs magnétostrictifs et avait une puissance efficace de 1400 W et fournissait des ultrasons à une fréquence de 20 kHz.

On a soumis la pièce dans la cuve à l'action combinée du solvant et des ultrasons pendant 1/2 heure. On a mesuré la valeur de l'isolement en continu. Au bout de 10 minutes de traitement, la valeur d'isolement atteignait 35 mégohms et au bout d'une demi heure, atteignait 100 mègohms, c'est-à-dire, une valeur pratiquement équivalente à la valeur d'isolement initiale du rotor neuf. On a alors vidé la cuve et récupéré le rotor.

On a filtré le solvant, puis distillé et stocké le solvant distillé pour une réutilisation future.

**Revendications**

1. Procédé de nettoyage d'une grosse pièce souillée par des particules de carbone, des graisses et des lubrifiants, comprenant:
—la mise en place de la pièce à l'intérieure d'une cuve;
—l'introduction d'un solvant dans la cuve jusqu'à immersion totale de la pièce à traiter;
—l'application d'une énergie ultrasonore pendant un temps suffisant pour en éliminer les saletés; et
—l'enlèvement de la pièce nettoyée de la cuve;
procédé caractérisé en ce que l'étape d'application d'un énergie ultrasonore consiste à appliquer une énergie ultrasonore d'origine magnétostrictive ayant une fréquence comprise entre 18 et 25 kHz.

2. Procédé selon la revendication 1, caractérisé en ce que l'énergie ultrasonore magnétostrictive a une fréquence comprise entre 18 et 20 kHz.

3. Procédé selon la revendication 1 caractérisé en ce que l'énergie ultrasonore magnétostrictive a une fréquence de 20 kHz.

4. Procédé selon l'une quelconque des revendications précédentes dans lequel le solvant est un hydrocarbone fluoré.

5. Procédé selon l'une quelconque des revendications précédentes dans lequel le solvant est chauffé à une température de 30°C environ.

6. Procédé selon l'une quelconque des revendications précédentes caractérisé en ce que l'étape d'application de l'énergie ultrasonore dure de 10 à 30 minutes.

7. Procédé de nettoyage d'un rotor souillé de machine dynamoélectrique, ce rotor souillé présentant une résistance d'isolement entre les bobinages et la masse nettement inférieure à la valeur nominale comprenant
—la mise en place du rotor sur un support dans une cuve de traitement;
—l'introduction d'un hydrocarbone fluoré comme solvant dans la cuve de manière à immerger totalement le rotor;
—le chauffage du solvant à une température d'environ 30°C;
—l'application d'une énergie ultrasonore et pendant cette application la mesure de la valeur de la résistance d'isolement du rotor;
—l'arrêt de l'application de l'énergie ultrasonore lorsque la résistance d'isolement mesurée atteint une valeur égale ou proche de la valeur nominale; et
—le retrait du rotor de la cuve;
procédé caractérisé en ce que l'énergie ultrasonore appliquée est d'origine magnétostrictive et a une fréquence comprise entre 18 et 25 kHz.

8. Procédé selon la revendication 7 caractérisé en ce que l'énergie ultrasonore a une fréquence de 20 kHz.

9. Appareil pour la mise en oeuvre du procédé selon la revendication 1 caractérisé en ce qu'il comprend:
une cuve de traitement comportant un support pour recevoir la pièce à traiter, un dispositif pour introduire un solvant dans la cuve, et un dispositif pour engendrer une énergie ultrasonore d'origine magnétostrictive d'une fréquence comprise entre 18 et 25 kHz comprenant au moins un transducteur magnétostrictif placé à l'extérieur sur la paroi de la cuve dans la zone de la pièce à traiter et un générateur ultrasonique relie au(x) transducteur(s).

**Patentansprüche**

1. Verfahren zum Reinigen eines großen Teils, das durch Kohlenstoffteilchen, Fette und Schmiermittel verunreinigt ist, durch:
—Einbringen des Teils in das Innere eines Behälters;
—Einleiten eines Lösungsmittels in den Behälter, bis das zu behandelnde Teil vollständig untergetaucht ist;

Zuführen einer Ultraschallenergie während einer Zeit, die zum Eliminieren der Verunreinigungen ausreicht; und

—Herausnehmen des gereinigten Teils aus dem Behälter;

wobei das Verfahren dadurch gekennzeichnet, ist, daß der Schritt des Zuführens eine Ultraschallenergie darin besteht, eine Ultraschallenergie magnetostriktiven Ursprungs zuzuführen, die eine Frequenz hat, welche zwischen 18 und 25 kHz liegt.

2. Verfahren nach Anspruch 1, dadurch gekennzeichnet, daß die magnetostriktive Ultraschallenergie eine Frequenz zwischen 18 und 20 kHz hat.

3. Verfahren nach Anspruch 1, dadurch gekennzeichnet, daß die magnetostriktive Ultraschallenergie eine Frequenz von 20 kHz hat.

4. Verfahren nach einem der vorhergehenden Ansprüche, bei dem das Lösungsmittel ein fluorierter Kohlenwasserstoff ist.

5. Verfahren nach einem der vorhergehenden Ansprüche, bei dem das Lösungsmittel auf eine Temperatur von ungefähr 30°C erwärmt wird.

6. Verfahren nach einem der vorhergehenden Ansprüche, dadurch gekennzeichnet, daß der Schritt des Zuführens der Ultraschallenergie 10 bis 30 Minuten dauert.

7. Verfahren zum Reinigen eines verunreinigten Läufers einer dynamoelektrischen Maschine, wobei der verunreinigte Läufer einen Isolationswiderstand zwischen den Wicklungen und Masse aufweist, der deutlich unter dem Nennwert ist, durch

—Aufbringen des Läufers auf einen Träger in einem Behandlungsbehälter;

—Einleiten eines fluorierten Kohlenwasserstoffes als Lösungsmittel in den Behälter, bis der Läufer vollständig untergetaucht ist;

—Erwärmen des Lösungsmittels auf eine Temperatur von ungefähr 30°C;

—Zuführen einer Ultraschallenergie und während dieses Zuführens Messen des Wertes des Isolationswiderstands des Läufers;

—Stoppen des Zuführens der Ultraschallenergie, wenn der gemessene Isolationswiderstand einen Wert erreicht, der gleich oder nahe bei dem Nennwert ist; und

—Herausnehmen des Läufers aus dem Behälter;

wobei das Verfahren dadurch gekennzeichnet, ist, daß die zugeführte Ultraschallenergie magnetostriktiven Ursprungs ist und eine Frequenz zwischen 18 und 25 kHz hat.

8. Verfahren nach Anspruch 7, dadurch gekennzeichnet, daß die Ultraschallenergie eine Frequenz von 20 kHz hat.

9. Vorrichtung zur Durchführung des Verfahrens nach Anspruch 1, gekennzeichnet durch:

einen Behandlungsbehälter mit einem Träger zum Aufnehmen des zu behandelnden Teils, eine Vorrichtung zum Einleiten eines Lösungsmittels in den Behälter und eine Vorrichtung zum Erzeugen einer Ultraschallenergie magnetostriktiven Ursprungs mit einer Frequenz zwischen 18 und 25 kHz, die wenigstens einen magnetostriktiven Wandler aufweist, der außen an der Wand des Behälters in der Zone des zu behandelnden Teils angeordnet ist, und einen Ultraschallgenerator, der mit dem (den) Wandler(n) verbunden ist.

**Claims**

1. A cleaning process for a large part soiled with carbon particles, greases and lubricants, comprising
—placing the part inside a tank,
—introducing solvent into the tank until the part to be treated is completely submerged;
—subjecting the submerged part to ultrasound for a time sufficient to remove the soiling matter; and
—removing the cleaned part from the tank; process characterized in that the step of applying an ultrasound energy consists in applying an ultrasound energy of magnetostrictive origin having a frequency ranging from 18 to 25 kHz.

2. A process according to claim 1, characterized by the fact that the frequency of the magnetostrictive ultrasound energy is between 18 and 20 kHz.

3. A process according to claim 1, characterized by the fact that the frequency of the magnetostrictive ultrasound energy is 20 kHz.

4. A process according to any one of the preceding claims, characterized by the fact that the solvent is a fluorinated hydrocarbon.

5. A process according to any one of the preceding claims, characterized in that the solvent is heated at a temperature of about 30°C.

6. A process according to any one of the preceding claims, characterized by the fact that the stop of applying ths ultrasound energy is performed from 10 to 30 minutes.

7. A cleaning process for a soiled rotor of a dynamoelectric machine, the insulating resistance of the soiled rotor between the windings and the ground being significantly lower than its rated value, characterized by the fact that it comprises:
—placing the rotor on a support in a treatment tank,
—introducing fluorinated hydrocarbon solvent into the tank until the rotor is totally submerged,
—heating the solvent to a temperature of about 30°C,
—applying an ultrasound energy whilst continuously measuring the value of the rotor insulation resistance,
—stopping the application of ultrasounds when the insulation resistance measured reaches a value equal or close to its rated value, and
—removing the rotor from the tank, process characterized in that the ultrasound energy applied is of magnetostrictive origin and has a frequency ranging from 18 to 25 kHz.

8. A process according to claim 7, characterized in that the ultrasound energy has a frequency of 20 kHz.

9. Apparatus for the implementation of the process according to claim 1, characterized by the fact that it comprises:

—a treatment tank comprising a support for the part to be treated, a device for introducing a solvent into the tank and a device for generating a magnetostrictive ultrasound energy having a frequency from 18 to 25 kHz, comprising at least one magnetostrictive transducer placed on the external wall of the tank in the area of the part to be treated and an ultrasound generator connected to the tranducer(s).